# EUROPEAN PATENT SPECIFICATION

(11) **EP 1 872 696 B1**
(45) Date of publication and mention of the grant of the patent: **08.04.2009**
(21) Application number: 06116173.3
(22) Date of filing: 27.06.2006
(51) Int. Cl.: A47G 27/04, E04F 21/20

(54) **Process of preparing a roll of floor-covering material**
Verfahren zum Vorbereiten von einer Rolle mit Fussbodenbelag
Procédé pour préparation d'un rouleau de revêtement de sol

(43) Date of publication of application: 02.01.2008
(73) Proprietor: New Carpetboy b.v.b.a., 8510 Marke (BE)
(72) Inventor: DEJONCKHEERE, Henk, 8510, MARKE (BE)
(74) Representative: Quintelier, Claude

(56) References cited:
- EP-A2- 0 104 305
- WO-A-96/12844
- DE-A1- 3 243 567
- DE-U1- 20 014 455
- GB-A- 2 063 710
- DATABASE WPI Week 2001 Derwent Publications Ltd., London, GB; AN 2001-508165 XP002410622 -& JP 2001 193268 A (KOYO SANGYO CO LTD) 17 July 2001 (2001-07-17)

## Description

The present application concerns a process of preparing a roll of floor-covering material, particularly, but not exclusively, for quick placement of temporary floor coverings for e.g. exhibition halls.

Conventionally, floor coverings having a front surface and a back surface have been fixed by their back surfaces onto floors using more or less permanent fixing means, such as nails, tacks, glue, etc. Such methods have the drawback of being quite labour-intensive and slow. Moreover, removing a floor covering once it has been fixed by such means is even more troublesome, which is of particular significance if the floor covering is meant to be only temporary, for instance in exhibition halls being prepared for special events. The alternative of laying the temporary floor covering leaving it loose was however dangerous and untidy, particularly in large floor surfaces where the floor covering could more easily slip or crease.

To address this problem, UK Patent Application GB 2063 710, which is considered to represent the closest prior art, disclosed a double-sided adhesive tape having a high-tack adhesive side for adhering to the back surface of the floor covering material and a low-tack adhesive side for adhering to a floor surface. This prior art also disclosed how said floor covering could be fixed to said floor surface in a removable manner wherein said floor covering was prepared by adhering the high-tack adhesive side of said double-sided adhesive tape to its back surface so that the floor covering could be adhered to the floor by the low-tack adhesive side of the double-sided adhesive tape. Thanks to this arrangement, the floor covering could eventually be easily removed without leaving any residue of the double-sided adhesive tape on the floor surface.

This prior art method has however the drawback that, as the adhesive tape and the floor covering material are provided separately, the floor covering first needs to be deployed in order to stick the high-tack adhesive side of the adhesive tape to it. If the floor covering is provided as usual in the form of a roll, this can take considerable time and the deployed floor covering can be quite unwieldy to move and place on the floor afterwards.

The object of the invention is therefore to provide a more efficient manufacture and application of the floor covering, so that it can be easily transported and then directly laid on and fixed to the floor surface.

For this purpose, the process of preparing a roll of quick-placement floor-covering material further comprises the step of rolling up said floor-covering material with the double-sided adhesive tape adhered to its back.

Optionally, the step of supplying said floor-covering material comprises the production of said floor-covering material, particularly insite. This has the advantage of allowing the continuous production of the roll of floor covering material in a single facility.

Preferably, the process also comprises the step of unrolling said double-sided adhesive tape from a roll in which the high-tack adhesive side faces inwardly and the low-tack adhesive side faces outwardly. This has the advantage of facilitating the step of adhering said double-sided adhesive tape to the back of the floor-covering material.

Advantageously, the high-tack adhesive side has a peel adhesion, measured according to the International Standard for Peel Adhesion of Pressure Sensitive Tape PSTC-101, between 30 and 45 N/25 mm, preferably 37 N/25 mm. These values are found to be particularly appropriate for reliably adhering the double-sided adhesive tape to the back of the floor-covering material.

Advantageously, the low-tack adhesive side has a peel adhesion, measured according to the International Standard for Peel Adhesion of Pressure Sensitive Tape PSTC-101, between 3 and 4,5 N/25 mm, preferably 3,7 N/25 mm. These values are found to be particularly appropriate for a reliable, but removable, adhesion of the floor covering to the floor surface.

Particularly advantageously, the process is a continuous process with all steps taking place concurrently. This has the advantage of considerably increasing the speed with which the roll of floor-covering material is prepared.

The present invention also concerns a floor-covering material with a double-sided adhesive tape, a roll of floor-covering material prepared according to the above-mentioned process and a process of laying a floor covering on a floor surface using said roll of floor-covering material.

The invention will be described in detail and non-limitingly with reference to the accompanying figures, in which:
Fig. 1 shows a continuous process of preparing a roll of floor-covering material according to a preferred embodiment of the invention;
Fig. 2 shows a roll of double-sided adhesive tape suitable to be used in said preferred embodiment of the invention; and
Fig. 3 shows a continuous process of laying a floor covering on a floor surface according to a preferred embodiment of the invention.

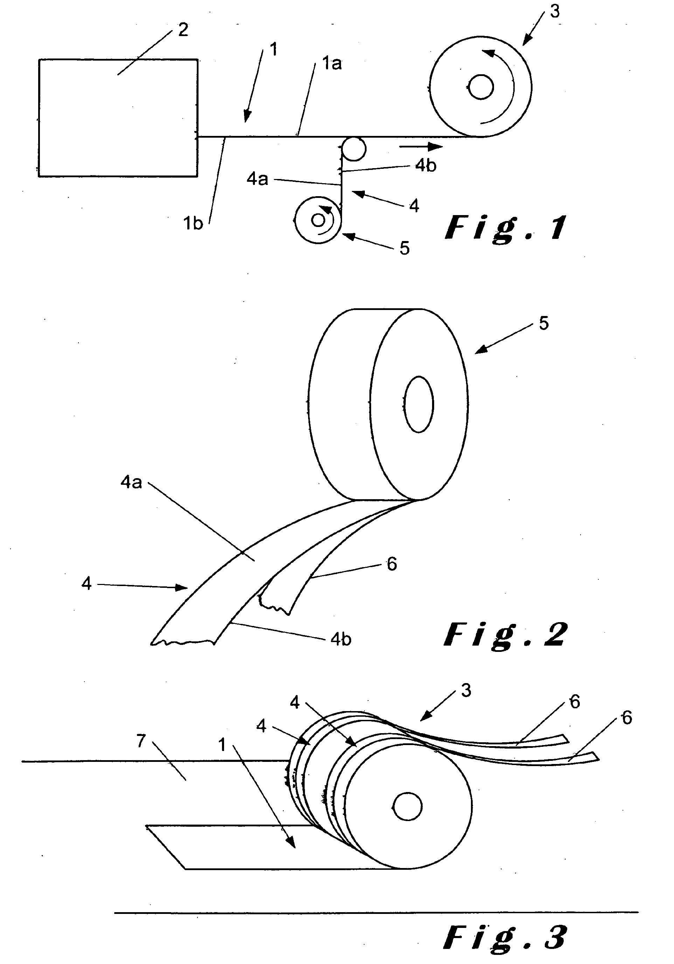

Turning now to Fig. 1, a process is illustrated in which floor-covering material 1, having a front surface 1 a and a back surface 1b, is produced in a production facility 2 and rolled up in a roll 3 of floor-covering material 1. Between the production facility 2 and the roll 3 of floor covering material 1, at least one double-sided adhesive tape 4 is unrolled from a roll 5 of double-sided adhesive tape and adhered along at least part of the back surface 1b of the floor-covering material 1. The double-sided adhesive tape 4 has a high-tack adhesive side 4a, and a low-tack adhesive side 4b covered with a liner 6. As can be appreciated in Fig. 2, in the roll of double-sided adhesive tape 5 the high-tack adhesive side 4a faces inwardly and the low-tack adhesive side 4b faces outwardly. Turning back to Fig. 1, the double-sided adhesive tape 4 is adhered to the back surface 1b of the floor-covering material 1 by its high-tack adhesive side 4a. The floor-covering material 1 is therefore rolled up in the roll 3 of floor-covering material, ready to be fixed to a floor surface with the at least one double-sided adhesive tape 4 adhered to its back 1b.

Although in the illustrated embodiment the floor-covering material 1 comes directly from the production facility 2, an alternative embodiment could be considered in which it would instead be unrolled from another roll.

The double-sided adhesive tape 4 is preferably a tape as sold under the trademarks EUROBANDS® EUROFIX® 36330/PV4, with a yellow cast polypropylene carrier, wherein the high-tack adhesive is a synthetic rubber adhesive, the low-tack adhesive is an acrylic-based adhesive and the liner 6 is a two-side siliconised polyethylene film with low release force. However, other double-sided adhesive tape types with different combinations of carrier, adhesives and liner could be used.

The liner 6 is necessary to avoid that the low-tack adhesive side 4b of the double-sided adhesive tape 4 sticks to the front surface of the floor-covering material when it is rolled up. It is particularly useful that the liner 6 be highly stretchable, so that it does not break when the floor-covering material 1 is rolled up in the roll 3 of floor-covering material 1. A polyethylene liner 6 is especially appropriate for this purpose.

The floor-covering material 1 is preferably a polypropylene needle-punched carpet.

Turning now to Fig. 3, a floor covering can then be laid on a floor surface 7 in an easy, continuous process using the above-mentioned roll 3 of floor-covering material 1. In this process, the roll 3 of floor covering material 1 is unrolled over the floor surface. As the roll 3 of floor covering material 1 is unrolled, the liner 6 is removed, preferably by mechanical means, from the low-tack adhesive side 4b of the double-sided adhesive tape 4, so that said low-tack adhesive side 4b can stick to the floor surface 7. In this way, a removable floor covering can quickly and easily be laid on the floor surface 7.

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense

## Claims

1. A process of preparing a roll (3) of floor-covering material (1), comprising the steps of:
a) supplying a floor-covering material (1) having a front surface (1a) and a back surface (1b);
b) supplying at least one double-sided adhesive tape (4) having a high-tack adhesive side (4a) and a low-tack adhesive side (4b); and
c) adhering with its high-tack adhesive side (4a) said double-sided adhesive tape (4) to at least part of the back surface (1b) of said floor-covering material (1);
**characterised in that** said low-tack side (4b) is covered with a liner (6), and **in that** the preparation process also comprises the step of rolling up said floor-covering material (1) with the double-sided adhesive tape (4) adhered to its back surface (1b).

2. The process according to claim 1, wherein the step of supplying the floor-covering material (1) comprises the production of said floor-covering material (1).

3. The process according to claim 2, wherein said production is on site.

4. The process according to any one of claims 1 to 3, **characterised in that** the step of supplying said double-sided adhesive tape (4) comprises unrolling said double-sided adhesive tape (4) from a roll (5) in which the high-tack adhesive side (4a) faces inwardly and the low-tack adhesive side (4b) faces outwardly.

5. The process according to any one of the previous claims and **characterised in that** it is a continuous process with all steps taking place concurrently.

6. A floor-covering material (1) with at least one double-sided adhesive tape (4), wherein said floor-covering material (1) has a front surface (1 a) and a back surface (1 b), said double-sided adhesive tape (4) having a high-tack adhesive side (4a) and a low-tack adhesive side (4b), said high-tack adhesive side (4a) of the adhesive tape being adhered to at least part of the back surface (1b) -of said floor-covering material (1), and **characterised in that** said low-tack adhesive side (4b) is covered with a liner (6).

7. The floor covering material (1) according to claim 6, wherein said liner (6) is made of a highly stretchable material.

8. The floor covering material (1) according to claim 7, wherein said liner (6) comprises polyethylene and is preferably siliconised.

9. The floor covering material (1) according to any one of claims 6 to 8, wherein the low-tack adhesive side (4b) of the double-sided adhesive band (4) has a peel adhesion, measured according to the International Standard for Peel Adhesion of Pressure Sensitive Tape PSTC-101, between 3 and 4,5 N/25 mm, preferably 3,7 N/25 mm.

10. The floor covering material (1) according to any one of claims 6 to 9, wherein the high-tack adhesive side (4a) of the double-sided adhesive band (4) has a peel adhesion, measured according to the International Standard for Peel Adhesion of Pressure Sensitive Tape PSTC-101, between 30 and 45 N/25 mm, preferably 37 N/25 mm.

11. A roll (3) of floor covering material (1) comprising a floor covering material (1) according to any one of claims 6 to 10.

12. A roll (3) of floor-covering material (1) prepared according to a process according to any one of claims 1 to 5.

13. A roll (3) of floor-covering material (1) according to claim 10, wherein the low-tack adhesive side (4b) of the double-sided adhesive band (4) has a peel adhesion, measured according to the International Standard for Peel Adhesion of Pressure Sensitive Tape PSTC-101, between 3 and 4,5 N/25 mm, preferably 3,7 N/25 mm.

14. A roll (3) of floor-covering material (1) according to any one of claims 10 or 11, wherein the high-tack adhesive side (4a) of the double-sided adhesive band (4) has a peel adhesion, measured according to the International Standard for Peel Adhesion of Pressure Sensitive Tape PSTC-101, between 30 and 45 N/25mm, preferably 37 N/25 mm.

15. A process of laying on a floor surface (7) a floor-covering material (1) from a roll (3) of floor-covering material (1) according to any one of claims 11 to 14, and comprising the steps of:
a) unrolling said roll (3) of floor-covering material (1) over said floor surface (7);
b) removing said liner (6) from the low-tack adhesive side (4b) of the double-sided adhesive tape (4);
c) adhering said low-tack adhesive side (4b) to the floor surface (7).

16. A process according to claim 15 and **characterised in that** it is a continuous process with all steps taking place concurrently.

## Patentansprüche

1. Verfahren zum Herstellen einer Rolle (3) mit Fußbodenbelag (1), folgende Schritte umfassend:
a) Bereitstellen eines Fußbodenbelags (1) mit einer Vorderseite (1 a) und einer Rückseite (1 b),
b) Bereitstellen mindestens eines doppelseitigen Klebebandes (4) mit einer stark haftenden Klebstoffseite (4a) und einer gering haftenden Klebstoffseite (4b) und
c) Anheften des doppelseitigen Klebebandes (4) mit seiner stark haftenden Klebstoffseite (4a) an mindestens einen Teil der Rückseite (1b) des Fußbodenbelags (1),
**dadurch gekennzeichnet, dass** die gering haftende Seite (4b) mit einer Trennlage (6) abgedeckt ist und dass das Herstellungsverfahren außerdem den Schritt des Aufrollens des Fußbodenbelags (1) mit dem an seiner Rückseite (1b) haftenden doppelseitigen Klebeband (4) umfasst.

2. Verfahren nach Anspruch 1, wobei der Schritt des Bereitstellens des Fußbodenbelags (1) die Produktion des Fußbodenbelags (1) umfasst.

3. Verfahren nach Anspruch 2, wobei die Produktion vor Ort stattfindet.

4. Verfahren nach einem der Ansprüche 1 bis 3, **dadurch gekennzeichnet, dass** der Schritt des Bereitstellens des doppelseitigen Klebebandes (4) das Abrollen des doppelseitigen Klebebandes (4) von einer Rolle (5) umfasst, wobei die stark haftende Klebstoffseite (4a) nach innen zeigt und die gering haftende Klebstoffseite (4b) nach außen.

5. Verfahren nach einem der vorhergehenden Ansprüche, **dadurch gekennzeichnet, dass** es sich um ein kontinuierliches Verfahren handelt, bei dem alle Schritte gleichzeitig stattfinden.

6. Fußbodenbelag (1) mit mindestens einem doppelseitigen Klebeband (4), wobei der Fußbodenbelag (1) eine Vorderseite (1 a) und eine Rückseite (1b) aufweist, wobei das doppelseitige Klebeband (4) eine stark haftende Klebstoffseite (4a) und eine gering haftende Klebstoffseite (4b) aufweist, wobei die stark haftende Klebstoffseite (4a) des Klebebandes an mindestens einen Abschnitt der Rückseite (1b) des Fußbodenbelags (1) angeheftet ist, **dadurch gekennzeichnet, dass** die gering haftende Klebstoffseite (4b) mit einer Trennlage (6) abgedeckt ist.

7. Fußbodenbelag (1) nach Anspruch 6, wobei die Trennlage (6) aus einem hochdehnbaren Material hergestellt ist.

8. Fußbodenbelag (1) nach Anspruch 7, wobei die Trennlage (6) Polyethylen umfasst und vorzugsweise silikonisiert ist.

9. Fußbodenbelag (1) nach einem der Ansprüche 6 bis 8, wobei die gering haftende Klebstoffseite (4b) des doppelseitigen Klebebandes (4) gemäß Messung nach dem International Standard for Peel Adhesion of Pressure Sensitive Tape PSTC-101 eine Haftkraft zwischen 3 und 4,5 N/25 mm, vorzugsweise 3,7 N/25 mm aufweist.

10. Fußbodenbelag (1) nach einem der Ansprüche 6 bis 9, wobei die stark haftende Klebstoffseite (4a) des doppelseitigen Klebebandes (4) gemäß Messung nach dem International Standard for Peel Adhesion of Pressure Sensitive Tape PSTC-101 eine Haftkraft zwischen 30 und 45 N/25 mm, vorzugsweise 37 N/25 mm aufweist.

11. Rolle (3) mit Fußbodenbelag (1), die einen Fußbodenbelag (1) nach einem der Ansprüche 6 bis 10 umfasst.

12. Rolle (3) mit Fußbodenbelag (1), die gemäß einem Verfahren nach einem der Ansprüche 1 bis 5 hergestellt wurde.

13. Rolle (3) mit Fußbodenbelag (1) nach Anspruch 10, wobei die gering haftende Klebstoffseite (4b) des doppelseitigen Klebebandes (4) gemäß Messung nach dem International Standard for Peel Adhesion of Pressure Sensitive Tape PSTC-101 eine Haftkraft zwischen 3 und 4,5 N/25 mm, vorzugsweise 3,7 N/25 mm aufweist.

14. Rolle (3) mit Fußbodenbelag (1) nach Anspruch 10 oder 11, wobei die stark haftende Klebstoffseite (4a) des doppelseitigen Klebebandes (4) gemäß Messung nach dem International Standard for Peel Adhesion of Pressure Sensitive Tape PSTC-101 eine Haftkraft zwischen 30 und 45 N/25 mm, vorzugsweise 37 N/25 mm aufweist.

15. Verfahren zum Verlegen eines Fußbodenbelags (1) von einer Rolle (3) mit Fußbodenbelag (1) nach einem der Ansprüche 11 bis 14 auf einer Bodenfläche (7), folgende Schritte umfassend:
a) Ausrollen der Rolle (3) mit Fußbodenbelag (1) auf der Bodenfläche (7),
b) Entfernen der Trennlage (6) von der gering haftenden Klebstoffseite (4b) des doppelseitigen Klebebandes (4),
c) Anheften der gering haftenden Klebstoffseite (4b) an die Bodenfläche (7).

16. Verfahren nach Anspruch 15, **dadurch gekennzeichnet, dass** es sich um ein kontinuierliches Verfahren handelt, bei dem alle Schritte gleichzeitig stattfinden.

## Revendications

1. Procédé de préparation d'un rouleau (3) de matériau de revêtement de sol (1) comprenant les étapes consistant à:
a) fournir un matériau de revêtement de sol (1) ayant une surface avant (1a) et une surface arrière (1b);
b) fournir au moins un ruban adhésif à double face (4) ayant un côté adhésif hautement pégueux (4a) et un côté adhésif faiblement pégueux (4b); et
c) coller avec son côté adhésif hautement pégueux (4a) ledit ruban adhésif à double face (4) sur au moins une partie de la surface arrière (1 b) dudit matériau de revêtement de sol (1);
**caractérisé en ce que** ledit côté faiblement pégueux (4b) est couvert avec une doublure (6) et **en ce que** le procédé de préparation comprend également l'étape consistant à enrouler ledit matériau de revêtement de sol (1) avec le ruban adhésif à double face (4) collé sur sa surface arrière (1b).

2. Procédé selon la revendication 1, dans lequel l'étape consistant à fournir le matériau de revêtement de sol (1) comprend la production dudit matériau de revêtement de sol (1).

3. Procédé selon la revendication 2, dans lequel ladite production se fait sur place.

4. Procédé selon l'une quelconque des revendications 1 à 3, **caractérisé en ce que** l'étape consistant à fournir ledit ruban adhésif à double face (4) comprend le déroulement dudit ruban adhésif à double face (4) d'un rouleau (5) dans lequel le côté adhésif hautement pégueux (4a) fait face à l'intérieur et le côté adhésif faiblement pégueux (4b) fait face à l'extérieur.

5. Procédé selon l'une quelconque des revendications précédentes et **caractérisé en ce qu'**il s'agit d'un procédé continu dont toutes les étapes ont lieu de manière concomitante.

6. Matériau de revêtement de sol (1) avec au moins un ruban adhésif à double face (4), dans lequel ledit matériau de revêtement de sol (1) a une surface avant (1a) et une surface arrière (1b), ledit ruban adhésif à double face (4) ayant un côté adhésif hautement pégueux (4a) et un côté adhésif faiblement pégueux (4b), ledit côté adhésif hautement pégueux (4a) du ruban adhésif étant collé sur au moins une partie de la surface arrière (1b) dudit matériau de revêtement de sol (1), et **caractérisé en ce que** ledit côté adhésif faiblement pégueux (4b) est couvert d'une doublure (6).

7. Matériau de revêtement de sol (1) selon la revendication 6, dans lequel ladite doublure (6) est en matériau hautement extensible.

8. Matériau de revêtement de sol (1) selon la revendication 7, dans lequel ladite doublure (6) comprend du polyéthylène et est de préférence siliconée.

9. Matériau de revêtement de sol (1) selon l'une quelconque des revendications 6 à 8, dans lequel le côté adhésif faiblement pégueux (4b) du ruban adhésif à double face (4) a une adhésion par pelage, mesurée selon la norme internationale pour l'adhésion par pelage de ruban sensible à la pression PSTC-101, entre 3 et 4,5 N / 25 mm, de préférence de 3,7 N / 25 mm.

10. Matériau de revêtement de sol (1) selon l'une quelconque des revendications 6 à 9, dans lequel le côté adhésif hautement pégueux (4a) du ruban adhésif à double face (4) a une adhésion par pelage, mesurée selon la norme internationale pour l'adhésion par pelage de ruban sensible à la pression PSTC-101, entre 30 et 45 N / 25 mm, de préférence de 37 N / 25 mm.

11. Rouleau (3) de matériau de revêtement de sol (1) comprenant un matériau de revêtement de sol (1) selon l'une quelconque des revendications 6 à 10.

12. Rouleau (3) de matériau de revêtement de sol (1) préparé suivant un procédé selon l'une quelconque des revendications 1 à 5.

13. Rouleau (3) de matériau de revêtement de sol (1) selon la revendication 10, dans lequel le côté adhésif faiblement pégueux (4b) du ruban adhésif à double face (4) a une adhésion par pelage, mesurée selon la norme internationale pour l'adhésion par pelage de ruban sensible à la pression PSTC-101, entre 3 et 4,5 N / 25 mm, de préférence de 3,7 N / 25 mm.

14. Rouleau (3) de matériau de revêtement de sol (1) selon l'une quelconque des revendications 10 ou 11, dans lequel le côté adhésif hautement pégueux (4a) du ruban adhésif à double face (4) a une adhésion par pelage, mesurée selon la norme internationale pour l'adhésion par pelage de ruban sensible à la pression PSTC-101, entre 30 et 45 N / 25 mm, de préférence de 37 N / 25 mm.

15. Procédé de pose sur une surface de sol (7) d'un matériau de revêtement de sol (1) provenant d'un rouleau (3) de matériau de revêtement de sol (1) selon l'une quelconque des revendications 11 à 14, et comprenant les étapes consistant à:
a) dérouler ledit rouleau (3) de matériau de revêtement de sol (1) sur ladite surface de sol (7);
b) enlever ladite doublure (6) du côté adhésif faiblement pégueux (4b) du ruban adhésif à double face (4);
c) coller ledit côté adhésif faiblement pégueux (4b) sur la surface de sol (7).

16. Procédé selon la revendication 15 et **caractérisé en ce qu'**il s'agit d'un procédé continu dont toutes les étapes ont lieu de manière concomitante.
